# EUROPEAN PATENT SPECIFICATION

(11) **EP 2 691 426 B1**
(45) Date of publication and mention of the grant of the patent: **24.12.2014**
(21) Application number: 12710973.4
(22) Date of filing: 29.03.2012
(51) Int. Cl.: C08F 220/00, C08F 224/00, C08L 37/00

(54) **PROCESS FOR RADICALLY CURING A COMPOSITION**
VERFAHREN ZUR VOLLSTÄNDIGEN HÄRTUNG EINER ZUSAMMENSETZUNG
PROCÉDÉ DE POLYMÉRISATION RADICALAIRE D'UNE COMPOSITION

(30) Priority: 30.03.2011 EP 11160432
(43) Date of publication of application: 05.02.2014
(73) Proprietor: DSM IP Assets B.V., 6411 TE Heerlen (NL)
(72) Inventor: HILKER, Iris, NL-6100 AA Echt (NL); JANSEN, Johan, Franz, Gradus, Antonius, NL-6100 AA Echt (NL); ARFSTEN, Nanning, Joerg, NL-6100 AA Echt (NL)
(74) Representative: Arendsen, Alexander Ferdinand
(86) International application number: PCT/EP2012/055666
(87) International publication number: WO 2012/130959

(56) References cited:
- EP-A1- 1 834 968
- WO-A2-2007/147782
- GB-A- 641 310
- US-A1- 2003 130 414
- AKKAPEDDI M K: "The free radical copolymerization characrteristics of alpha-methylene gamma-butyrolactone", POLYMER, ELSEVIER SCIENCE PUBLISHERS B.V, GB, vol. 20, 1 January 1979 (1979-01-01), pages 1215-1216, XP002638452, ISSN: 0032-3861

## Description

The present invention relates to a process for radically curing a composition comprising a methacrylate containing compound (a1) and a monomer copolymerizable with said methacrylate containing compound in the presence of a transition metal compound (c) and a peroxide.

Such processes are known in the art. For example, a composition comprising a methacrylate functional resin diluted in styrene as reactive diluent, which resin composition is pre-accelerated with a transition metal compound such as a cobalt compound, is radical copolymerized (cured) with a peroxide. Styrene is often used as monomer that is copolymerizable with said methacrylate functional resin since styrene is a very effective reactive diluent. Although styrene is a very effective reactive diluent, since styrene has a high copolymerization ability and a good cutting power (viscosity of the composition can be lowered efficiently when using styrene as comonomer), styrene has however an undesirable odour which is even more hindering since styrene is volatile. In view of this, there is a need to at least partly replace styrene by another comonomer with a good reactivity and good cutting power, but has less odour and/or is less volatile (i.e. has a higher boiling point). A standard replacement would be the use of high boiling methacrylate containing compounds. However, in general they have a reduced cutting power and furthermore they result in general in severe oxygen inhibition, i.e. upon curing in air, the surface remains tacky or even wet (uncured).

The object of the present invention is to provide a process with less odour and with high curing efficiency (as demonstrated by short gel time, short peak time and/or high peak temperature).

The object has surprisingly achieved in that the composition comprises a compound (b) according to formula (1) as monomer copolymerizable with said methacrylate containing compound 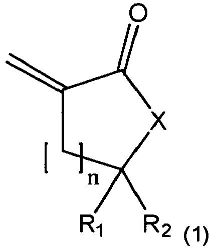 whereby n= 0-3; R₁ and R₂ each individually represent H, C₁-C₂₀ alkyl, C₃-C₂₀ cycloalkyl, C₆-C₂₀ aryl, C₇-C₂₀ alkylaryl or C₇-C₂₀ arylalkyl; X = O, S or NR₃ whereby R₃ = H, C₁-C₂₀ alkyl, C₃-C₂₀ cycloalkyl, C₆-C₂₀ aryl, C₇-C₂₀ alkylaryl, C₇-C₂₀ arylalkyl, part of a polymer chain or attached to a polymer chain, and the composition comprises at least one transition metal compound (c) selected from the group consisting of Co, Cu, Mn and Fe compounds, and the curing is effected in the presence of a peroxide selected from the group consisting of hydroperoxides, perketals, peresters, percarbonates and mixtures thereof.

It has furthermore surprisingly been found that, when effecting the process according to the invention in the presence of air, the curing can be improved, in particular the tackiness of the air surface can be reduced and even tack free surfaces can be obtained. An additional advantage is that compound (b) has a good cutting power in compositions comprising a methacrylate containing compound (a1) with a number-average molecular weight Mₙ of at least 600 Dalton.

It has furthermore surprisingly been found that the process of the present invention can result in a higher glass transition temperature (T_{g}) and/or higher crosslink density of the cured network and thus an improved cured network can be obtained.

An additional advantage of using compounds according to formula (1) is that they can be prepared from biobased raw materials.

The radical curing process according to the invention in particular comprises
(i) providing a composition comprising a methacrylate containing compound (a1), a compound (b) according to formula (1) (copolymerizable with said methacrylate containing compound (a1)), at least one transition metal compound (c) selected from the group consisting of Co, Cu, Mn and Fe compounds,
(ii) adding to said composition a peroxide selected from the group consisting of hydroperoxides, perketals, peresters, percarbonates and mixtures thereof.

The composition comprises a compound (b) according to formula (1). Such compounds can be commercially obtained from for example TCI Europe and can be prepared with the method as described for example by Gary M. Ksander, John E. McMurry, and Mark Johnson, "A Method for the Synthesis of Unsaturated Carbonyl Compounds" in J. Org. Chem. 1977, vol. 42, issue 7, pages 1180-1185, or by Mitsuru Ueda and Masami Takahasi, "Radical-Initiated Homo- and Copolymerization of α-Methyl-γ-Butyrolactone" in J. Pol. Sci. A 1982, vol. 20, p. 2819-2828.

Preferably, n is 1 or 2. More preferably, n is 1. X is preferably O. Preferably, R₁ and R₂ each individually represent H or CH₃. More preferably, R₁ and R₂ are both H or R₁ is H and R₂ is CH₃. In a preferred embodiment of the invention, the composition comprises a compound (b) according to formula (2) 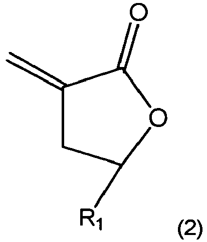 whereby R₁ is H or CH₃.

The composition preferably comprises methacrylate containing compounds (a1) with a number-average molecular weight Mₙ of at least 225 Dalton. As used herein, the number-average molecular weight (Mₙ) is determined in tetrahydrofuran using GPC employing polystyrene standards. Preferably, the methacrylate containing compounds (a1) have a number-average molecular weight Mₙ of at most 10000 Dalton.

Preferably, at least part of the methacrylate containing compound (a1) present in the composition has a methacrylate functionality of at least 2. As used herein, methacrylate functionality is defined as the number of CH₂=CMeCOO- per molecule of methacrylate containing compound. In a preferred embodiment, the composition comprises a mixture of methacrylate containing compounds (a1) which mixture has an average methacrylate functionality higher than 1, preferably higher than 1.5 and more preferably higher than 1.7. The upper limit of the average functionality is not critical. Preferably the average functionality is lower than 4, more preferably lower than 3.

Preferably, the methacrylate containing compounds (a1) further contain at least one ether group, at least one hydroxyl group and/or at least one urethane group. In one preferred embodiment, the methacrylate containing compound (a1) further contains an ether group. A preferred methacrylate containing compound (a1) further containing an ether group is an alkoxylated bisphenol A dimethacrylate.

In another preferred embodiment, the methacrylate containing compound (a1) further contains an ether group and a hydroxyl group. A methacrylate containing compound (a1) further containing an ether group and a hydroxyl group is preferably obtained by reaction of an epoxy oligomer or polymer with methacrylic acid or methacrylamide, preferably with methacrylic acid. A preferred methacrylate containing compound (a1) further containing an ether group and a hydroxyl group is a bisphenol A glycerolate dimethacrylate.

In still another preferred embodiment, the methacrylate containing compound (a1) further contains an urethane group. A methacrylate containing compound (a1) further containing an urethane group is preferably obtained by reaction of a hydroxyl functional methacrylate with an isocyanate.

The methacrylate containing compound (a1) present in the composition may also be a mixture of methacrylate containing compounds as described above.

In case the composition comprises a methacrylate containing compound (a1) with a number-average molecular weight Mₙ of at least 600 Dalton, the composition may further comprise an ethylenically unsaturated compound (a2) with a number-average molecular weight Mₙ of at most 300 Dalton. Non-limiting preferred examples are styrene, α-methylstyrene, vinyltoluene, hydroxyethylmethacrylate, hydroxypropylmethacrylate, methyl methacrylate, ethyl methacrylate, hydroxybutylvinylether, N-vinylcaprolactam, N-vinyl pyrrolidone, laurylmethacrylate or mixtures thereof.

The amount of compound (b) relative to the total amount of compounds (a) and (b) is preferably at least 1 wt.%, more preferably at least 5 wt.%, even more preferably at least 10 wt.% and even more preferably at least 25 wt.%. As used herein, the amount of compounds (a) is the total amount of compounds (a1) and (a2). The amount of compound (b) relative to the total amount of compounds (a) and (b) is preferably at most 99 wt.%, more preferably at most 95 wt.%, more preferably at most 90 wt.%, even more preferably at most 70 wt.% and even more preferably at most 65 wt.%. Preferably, the amount of compound (b) relative to the total amount of compounds (a) and (b) is from 1 to 95 wt.%, and more preferably from 25 to 65 wt.%.

The process according to the invention is effected in the presence of transition metal compound (c), dissolved in the mixture of methacrylate containing compounds and monomers copolymerizable with the methacrylate containing compounds, and selected from the group consisting of Co, Cu, Mn, Fe compounds and any mixture thereof. Preferably, in view of curing efficiency, the process is effected in the presence of a transition metal compound (c) selected from the group consisting of Co, Cu, Mn compounds and any mixture thereof.

The Co compounds, Cu compounds, Fe compounds and Mn compounds are preferably salts and/or complexes. Preferably, the resin composition comprises a transition metal compound (c) selected from the group consisting of cobalt carboxylate, copper carboxylate, iron carboxylate, manganese carboxylate, cobalt acetylacetonate, copper acetylacetonate, iron acetylacetonate, manganese acetylacetonate , iron halide and any mixtures thereof. A preferred iron halide is iron chloride. More preferably the transition metal compound (c) is a cobalt carboxylate, a copper carboxylate, an iron carboxylate, a manganese carboxylate, a cobalt acetylacetonate, a copper acetylacetonate, an iron acetylacetonate, a manganese acetylacetonate, an iron halide or any mixture thereof. The carboxylate is preferably a C₁- C₃₀ carboxylate and more preferably a C₁-C₁₆ carboxylate.

The Co salt is preferably a Co²⁺ and/or a Co³⁺ salt. The Co complex is preferably a Co²⁺ and/or a Co³⁺ complex. The Cu salt is preferably a Cu⁺ and/or a Cu²⁺ salt. The Cu complex is preferably a Cu⁺ and/or a Cu²⁺ complex. The Mn salt is preferably a Mn²⁺ and/or a Mn³⁺ salt. The Mn complex is preferably a Mn²⁺ and/or a Mn³⁺ complex. The Fe salt is preferably a Fe²⁺ and/or a Fe³⁺ salt. The Fe complex is preferably a Fe²⁺ and/or a Fe³⁺ complex.

The total amount of Co, Cu, Mn and Fe compounds used in the process according to the invention is such that the total amount of Co, Cu, Mn and Fe in mmol per kg of the sum of the amounts of compounds (a) and (b) is preferably from 0.01 to 30, and more preferably from 0.1 to 20.

The process may be effected in the presence of a co-accelerator. Depending on the transition metal choice, the person skilled in the art will be able to choose an appropriate co-accelerator to obtain the desired curing characteristics. For example, in case a Co compound is used as transition metal compound, the co-accelerator is preferably an amine and/or a 1,3-dioxo compound. In case a Cu compound is used as transition metal compound, the co-accelerator is preferably an amine, acetoacetamide, a K salt, an imidazole and/or a gallate or mixtures thereof. In case a Mn compound is used as transition metal compound, the co-accelerator is preferably a 1,3-dioxo compound, a thiol and/or a K or Li salt or mixtures thereof. In case a Fe compound is used as transition metal compound, the co-accelerator is preferably a 1,3-dioxo compound and/or a thiol preferably in combination with an alkali metal salt. Non-limiting examples of 1,3-dioxo compounds are acetyl acetone, acetoacetates and acetoacetamides.The amount of co accelerator can vary within wide ranges and is preferably more than 0.01 wt.% and less than 10 wt.% preferably more than 0.1 wt.% and less than 5 wt.% (amount is given relative to the total amount of (a1), (a2) and (b)).

In one embodiment of the invention, the resin composition comprises a Co compound as transition metal compound and optionally a co-accelerator. The co-accelerator is preferably an amine and/or a 1,3-dioxo compound. In another embodiment of the invention, the resin composition comprises a Cu compound as transition metal compound and the resin composition preferably further comprises a co-accelerator preferably selected from an amine, an acetoacetamide, a K salt, an imidazole and/or a gallate or mixtures thereof. In still another embodiment of the invention, the resin composition comprises a Mn compound as transition metal compound and the resin composition preferably further comprises a co-accelerator preferably selected from a 1,3-dioxo compound, a thiol and/or a K or Li salt or mixtures thereof. In still another embodiment of the invention, the resin composition comprises a Fe compound as transition metal compound and the resin composition preferably further comprises a co-accelerator, the co-accelerator is preferably a 1,3-dioxo compound and/or a thiol preferably in combination with an alkali metal salt.

The composition preferably further comprises a radical inhibitor. These radical inhibitors are preferably chosen from the group of phenolic compounds, benzoquinones, hydroquinones, catechols, stable radicals and/or phenothiazines. The amount of radical inhibitor that can be added may vary within rather wide ranges, and may be chosen as a first indication of the gel time as is desired to be achieved.

Suitable examples of radical inhibitors that can be used in the compositions according to the invention are, for instance, 2-methoxyphenol, 4-methoxyphenol, 2,6-di-t-butyl-4-methylphenol, 2,6-di-t-butylphenol, 2,4,6-trimethyl-phenol, 2,4,6-tris-dimethylaminomethyl phenol, 4,4'-thio-bis(3-methyl-6-t-butylphenol), 4,4'-isopropylidene diphenol, 2,4-di-t-butylphenol, 6,6'-di-t-butyl-2,2'-methylene di-p-cresol, hydroquinone, 2-methylhydroquinone, 2-t-butylhydroquinone, 2,5-di-t-butylhydroquinone, 2,6-di-t-butylhydroquinone, 2,6-dimethylhydroquinone , 2,3,5-trimethylhydroquinone, catechol, 4-t-butylcatechol, 4,6-di-t-butylcatechol, benzoquinone, 2,3,5,6-tetrachloro-1,4-benzoquinone, methylbenzoquinone, 2,6-dimethylbenzoquinone, napthoquinone, 1-oxyl-2,2,6,6-tetramethylpiperidine, 1-oxyl-2,2,6,6-tetramethylpiperidine-4-ol (a compound also referred to as TEMPOL), 1-oxyl-2,2,6,6-tetramethylpiperidine-4-one (a compound also referred to as TEMPON), 1-oxyl-2,2,6,6-tetramethyl-4-carboxyl-piperidine (a compound also referred to as 4-carboxy-TEMPO), 1-oxyl-2,2,5,5-tetramethylpyrrolidine, 1-oxyl-2,2,5,5-tetramethyl-3-carboxylpyrrolidine (also called 3-carboxy-PROXYL), galvinoxyl, aluminium-N-nitrosophenyl hydroxylamine, diethylhydroxylamine, phenothiazine and/or derivatives or combinations of any of these compounds.

Advantageously, the amount of radical inhibitor in the composition (relative to the total amount of the composition) is in the range of from 0.0001 to 10 % by weight. More preferably, the amount of inhibitor in the composition is in the range of from 0.001 to 1 % by weight. The skilled man quite easily can assess, in dependence of the type of inhibitor selected, which amount thereof leads to good results according to the invention.

Very suitable examples of hydroperoxides are tert-butyl hydroperoxide and cumene hydroperoxide. Preferred perketals are the addition products of hydrogen peroxide with a ketone. Very suitable examples of such perketals are methyl ethyl keton peroxide and acetylacetonperoxide. A very suitable example of perester is tert-butyl perbenzoate. A very suitable example of percarbonate is for instance tert-butyl peroxy ethylhexylcarbonate. The skilled man quite easily can assess, in dependence of the type of transition metal compound selected, which peroxide leads to good results according to the invention. The peroxide is preferably a hydroperoxide, a perester and/or a perketal as these peroxides have a higher thermal stability than percarbonates.

The required amount of peroxide can be varied within wide ranges and is preferably from 0.001 to 10 wt.% and more preferably from 0.01 to 5 wt.%, relative to the total amount of compounds (a) and (b).

In a preferred embodiment, the process comprises adding the peroxide to a composition comprising compounds (a1), (b) and (c). Said adding is preferably done by mixing the peroxide into the composition comprising compounds (a1), (b) and (c).

The process according to the invention is preferably effected at a temperature in the range of from -20 to +150 °C, more preferably in the range of from -20 to +100 °C and even more preferably in the range of from -20 to + 40°C.

The present invention further relates to a multicomponent system comprising a methacrylate containing compound (a1), a monomer copolymerizable with said methacrylate containing compound, a transition metal compound (c) and a peroxide, wherein the system comprises a compound (b) according to formula (1) as monomer copolymerizable with said methacrylate containing compound 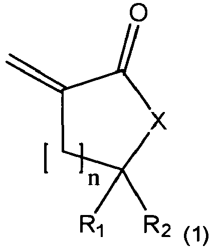 whereby n= 0-3; R₁ and R₂ each individually represent H, C₁-C₂₀ alkyl, C₃-C₂₀ cycloalkyl, C₆-C₂₀ aryl, C₇-C₂₀ alkylaryl or C₇-C₂₀ arylalkyl; X = O, S or NR₃ whereby R₃ = H, C₁-C₂₀ alkyl, C₃-C₂₀ cycloalkyl, C₆-C₂₀ aryl, C₇-C₂₀ alkylaryl, C₇-C₂₀ arylalkyl, part of a polymer chain or attached to a polymer chain;
the system comprises at least one transition metal compound (c) selected from the group consisting of Co, Cu, Mn and Fe compounds; and at least one peroxide selected from the group consisting of hydroperoxides, perketals, peresters and percarbonates.

As used herein, multicomponent systems means a system with at least two spatially separated components whereby the peroxide is present in one component that does not comprise radical copolymerizable compounds including compounds (a1) and (b) in order to prevent premature radical copolymerization of the compounds (a1) and (b) prior to the use of the multicomponent system to obtain the cured network. At the moment that the radically copolymerization of the compounds (a1) and (b) is desired, at least a peroxide as described above is added to this composition. Preferably, said adding is done by mixing the peroxide into the composition comprising compounds (a1) and (b). The multicomponent system according to the invention comprises at least two components.

Preferred compounds (a1), (b) and (c) as well as the amounts are as described above. The system may further comprise additional compounds in amounts as described above.

The use of the multicomponent system according to the invention requires mixing of at least the compounds (a1), (b) and (c) together with a peroxide selected from the group consisting of hydroperoxides, perketals, peresters, percarbonates and mixtures thereof to obtain a cured network.

In one embodiment, the multicomponent system comprises at least three components I, II and III, whereby component I consists of a composition comprising compounds (a1) and (b), component II consists of a composition comprising compound (c) and component III comprises the peroxide.

In another embodiment, the multicomponent system comprises at least two components I and II, whereby component I consists of a composition comprising compounds (a1), (b) and (c) and component II comprises the peroxide.

The present invention further relates to a thermosetting composition comprising a methacrylate containing compound (a1), a monomer copolymerizable with said methacrylate containing compound, a transition metal compound (c), wherein the composition comprises a compound (b) according to formula (1) as monomer copolymerizable with said methacrylate containing compound 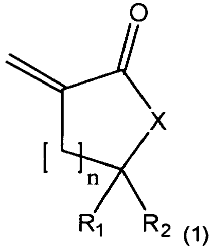 whereby n= 0-3; R₁ and R₂ each individually represent H, C₁-C₂₀ alkyl, C₃-C₂₀ cycloalkyl, C₆-C₂₀ aryl, C₇-C₂₀ alkylaryl or C₇-C₂₀ arylalkyl; X = O, S or NR₃ whereby R₃ = H, C₁-C₂₀ alkyl, C₃-C₂₀ cycloalkyl, C₆-C₂₀ aryl, C₇-C₂₀ alkylaryl, C₇-C₂₀ arylalkyl, part of a polymer chain or attached to a polymer chain;
the composition comprises at least one transition metal compound (c) selected from the group consisting of Co, Cu, Mn and Fe compounds; and the composition comprises (in)organic filler, and whereby the composition is curable with a peroxide selected from the group consisting of hydroperoxides, perketals, peresters, percarbonates and mixtures thereof. Preferred compounds (a1), (b) and (c) as well as the amounts are as described above. The system may further comprise additional compounds in amounts as described above.

The amount of (in)organic filler relative to the total amount of compounds (a), (b) and (c) is preferably from 10 to 90 wt.%. Preferably, the thermosetting composition comprises fibre as filler. Suitable fillers are aluminium trihydrate, calcium carbonate, mica, glass, microcrystalline silica, quartz, barite and/or talc. These fillers may be present in the form of sands, flours or molded objects, especially in the form of fibers or spheres. Examples of fibres are glass fibres and carbon fibres.

The present invention further relates to cured objects obtained by the process as described above or obtained by mixing the compounds of the multicomponent system as described above or obtained by curing the thermosetting composition as described above with a peroxide selected from the group consisting of hydroperoxides, perketals, peresters, percarbonates and mixtures thereof.

The present invention further relates to the use of such a cured object in automotive, boats, chemical anchoring, roofing, construction, containers, relining, pipes, tanks, flooring or windmill blades.

The invention is now demonstrated by means of a series of examples and comparative examples. All examples are supportive of the scope of claims. The invention, however, is not restricted to the specific embodiments as shown in the examples.

### Gel timer experiments

In some of the Examples and Comparative Experiments presented hereinafter, it is mentioned that curing was monitored by means of standard gel time equipment. This is intended to mean that both the gel time (T_{gel} or T_{25->35°C}), peak time (Tₚₑₐₖ or T_{25->peak}) and peak temperature were determined by exotherm measurements according to the method of DIN 16945 when curing the resin with the peroxides as indicated in the Examples and Comparative Examples. The equipment used therefore was a Soform gel timer, with a Peakpro software package and National Instruments hardware; the waterbath and thermostat used were respectively Haake W26, and Haake DL30.

### Example 1 and comparative experiment A

To a mixture of 2 g butane diol dimethacrylate (BDDMA) and 13 g α-methylene butyrolactone (MBL- commercially obtained from TCI Europe) and 0.1 g acrylic acid was added 442 mg NL-49P (1% Co solution, Akzo Nobel). After stirring for 5 min, 300 mg Butanox M50 (perketal, Akzo Nobel) was added and the curing was monitored in the standard gel time equipment.

For the comparative experiment the MBL was replaced by BDDMA. For the determination of surface cure, the experiments were repeated except that now the mixture was poured into an Al dish resulting in a 4 mm thick casting.

The results are shown in table 1.

**Table 1**

| | Gel time (min) | Peak time (min) | Peak Temp (°C) | Surface | Bottom |
|---|---|---|---|---|---|
| 1 | 57 | 70 | 182 | Solid, tack free | Hard |
| A | 126.9 | 142.1 | 160 | Liquid | Hard |

This example combined with the comparative experiment already demonstrates that a transition metal/ peroxide combination can be used to cure compositions comprising α-methylene butyrolactone. Furthermore applying such a composition can surprisingly result in a good curing (i.e. a lower gel time is achieved in comparision with BDDMA being difunctional and thus high reactive). Even in air a good curing can be obtained. In Example 1 surprisingly less oxygen inhibition is obtained (as can be derived from the surface cure) in comparison with Comparative Experiment A. In Comparative Experiment A solely BDDMA is used; a man skilled in the art would expect less oxygen inhibition in Comparative Experiment A compared to Example 1 since BDDMA is difunctional. It should also be noted that by addition of α-methylene butyrolactone the polymerization is proceeding more rapid, as demonstrated by the gel time.

### Example 2 and comparative experiments B1-B3

To 30.6 g SR540 (methacrylate functional resin, Cray Valley) was added 14.4 g of various reactive diluents (see Table 3) and the viscosity of the mixture was determined (Brookfield CAP1000, cone 1, 25C, 750rpm).

To these mixtures, 210 mg Nuodex Cu-8 (a 8% Cu solution, Rockwood) was added and the mixtures were stirred for 5 minutes.

Next 300 mg Trigonox C (t-butyl perbenzoate; perester; Akzo Nobel) was added and the curing was monitored using the standard geltimer equipment.

The results are shown in table 3.

**Table 2**

| | Reactive Diluent | Boiling point (°C/mmHg | Gel time (min) | Peak time (min) | Peak temp (°C) | Viscosity (Pa.s) |
|---|---|---|---|---|---|---|
| 2 | MBL | 88/12 | 324.5 | 343 | 118 | 0.042 |
| B1 | Styrene | 145/760 | >1200 | | | 0.028 |
| B2 | Methyl methacrylate | 100 | >1200 | | | 0.042 |
| B3 | Laurylmethacrylate LMA | 142/4 | >1200 | | | 0.053 |

Example 2 combined with the comparative experiments B1-B3 demonstrate that α-methylene butyrolactone has a good cutting power (as shown by the viscosity). Furthermore, the gel time, peak time and peak temperature demonstrate that α-methylene butyrolactone has a good reactivity when curing a resin system as claimed and that a good curing can be obtained.

### Example 3-9 and comparative experiments C1-C4

To a mixture of 50 g SR 540 (ethoxylated bisphenol A dimethacrylate, Sartomer) and 50 g MBL was added 0.5 g of various metal solutions and optionally 0.5 g of co-accelerator (obtained from Aldrich). After stirring for 5 min, 2 g of various peroxides were added. The curing was monitored visually and the results are shown in table 2.

**Table 3**

| | Metal solution | Metal | additive | peroxide | Cure |
|---|---|---|---|---|---|
| 3 | NL-49P | Co | | Butanox M50 | Yes |
| 4 | Octasoligen Mn-10 (obtained from OMG) | Mn | 1 % Acetyl acetone/ 1% K octanoate solution | Butanox M50 | Yes |
| 5 | Nuodex Fe-12 (obtained from Rockwood) | Fe | 1% Acetyl acetone/ 1% K octanoate solution | Butanox M50 | Yes |
| 6 | Nuodex Cu-8 (obtained from Rockwood) | Cu | 1% Dytek A | Butanox M50 | Yes |
| 7 | NL-49P | Co | | Trigonox 44B | Yes |
| 8 | Nuodex Cu-8 (obtained from Rockwood) | Cu | 1% 1,5-diamino-2-methylpentane | Trigonox C | Yes |
| 9 | Nuodex Cu-8 (obtained from Rockwood) | Cu | 1% 1,5-diamino-2-methylpentane | Trigonox 117 | Yes |
| C1 | Nuodex Zr-8 (obtained from Rockwood) | Zr | | Butanox M50 | No |
| C2 | Octasoligen Zn-12 (obtained from OMG) | Zn | | Butanox M50 | No |
| C3 | Nuodex Ca-5 (obtained from Rockwood) | Ca | | Butanox M50 | No |
| C4 | Potassium 2-ethylhexanoate (15%K in solvents) (obtained from Rockwood) | K | | Butanox M50 | No |

The examples and comparative experiments clearly show that only when using a transition metal solution as claimed, it is possible to obtain a good cure.

## Claims

1. Process for radically curing a composition comprising a methacrylate containing compound (a1) and a monomer copolymerizable with said methacrylate containing compound in the presence of a transition metal compound (c) and a peroxide, **characterized in that** the composition comprises a compound (b) according to formula (1) as monomer copolymerizable with said methacrylate containing compound 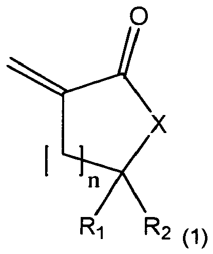 whereby n= 0-3; R₁ and R₂ each individually represent H, C₁-C₂₀ alkyl, C₃-C₂₀ cycloalkyl, C₆-C₂₀ aryl, C₇-C₂₀ alkylaryl or C₇-C₂₀ arylalkyl; X = O, S or NR₃ whereby R₃ = H, C₁-C₂₀ alkyl, C₃-C₂₀ cycloalkyl, C₆-C₂₀ aryl, C₇-C₂₀ alkylaryl, C₇-C₂₀ arylalkyl, part of a polymer chain or attached to a polymer chain,
and the composition comprises at least one transition metal compound (c) selected from the group consisting of Co, Cu, Mn and Fe compounds,
and the curing is effected in the presence of a peroxide selected from the group consisting of hydroperoxides, perketals, peresters, percarbonates and mixtures thereof.

2. Process according to claim 1, **characterized in that** compound (b) is according to formula (2). 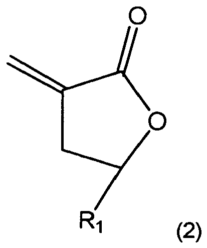 whereby R₁ is H or CH₃.

3. Process according to claim 1 or 2, **characterized in that** the methacrylate containing compound (a1) has a number-average molecular weight Mₙ of at least 225 Dalton and of at most 10000 Dalton.

4. Process according to anyone of the preceding claims, **characterized in that** at least part of the methacrylate containing compound (a1) present in the composition has a methacrylate functionality of at least 2.

5. Process according to anyone of the preceding claims, **characterized in that** the average functionality of the methacrylate containing compounds (a1) is higher than 1, preferably higher than 1.5 and more preferably higher than 1.7.

6. Process according to anyone of the preceding claims, **characterized in that** the average functionality of the methacrylate containing compounds (a1) is lower than 4, more preferably lower than 3.

7. Process according to anyone of the preceding claims, **characterized in that** the methacrylate containing compounds (a1) further contain at least one ether group and at least one hydroxyl group.

8. Process according to anyone of the preceding claims, **characterized in that** the methacrylate containing compounds (a1) further contain at least one urethane group.

9. Process according to anyone of the preceding claims, **characterized in that** the composition comprises a methacrylate containing compound (a1) with a number-average molecular weight Mₙ of at least 600 Dalton and the composition further comprises an ethylenically unsaturated compound (a2) with a number-average molecular weight Mₙ of at most 300 Dalton.

10. Process according to anyone of the preceding claims, **characterized in that** the curing is effected in the presence of a transition metal compound (c) selected from the group consisting of Co, Cu, Mn compounds and any mixture thereof.

11. Process according to anyone of the preceding claims, **characterized in that** the Co compounds, Cu compounds, Fe compounds and Mn compounds are salts and/or complexes.

12. Process according to anyone of the preceding claims, **characterized in that** the total amount (in mmol) of Co, Cu, Mn and Fe compounds (relative to the total amount (in kilogram) of compound (a) and compound (b)) is from 0.01 to 30.

13. Process according to anyone of the preceding claims, **characterized in that** the process is effected in the presence of a co-accelerator.

14. Process according to anyone of the preceding claims, **characterized in that** the process comprises adding the peroxide to a composition comprising compounds (a1), (b) and (c).

15. Multicomponent system comprising a methacrylate containing compound (a1), a monomer copolymerizable with said methacrylate containing compound, a transition metal compound (c) and a peroxide, **characterized in that** the system comprises a compound (b) according to formula (1) as monomer copolymerizable with said methacrylate containing compound 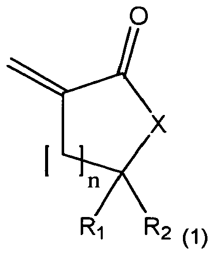 whereby n= 0-3; R₁ and R₂ each individually represent H, C₁-C₂₀ alkyl, C₃-C₂₀ cycloalkyl, C₆-C₂₀ aryl, C₇-C₂₀ alkylaryl or C₇-C₂₀ arylalkyl; X = O, S or NR₃ whereby R₃ = H, C₁-C₂₀ alkyl, C₃-C₂₀ cycloalkyl, C₆-C₂₀ aryl, C₇-C₂₀ alkylaryl, C₇-C₂₀ arylalkyl, part of a polymer chain or attached to a polymer chain;
the system comprises at least one transition metal compound (c) selected from the group consisting of Co, Cu, Mn and Fe compounds; and at least one peroxide selected from the group consisting of hydroperoxides, perketals, peresters and percarbonates.

16. Thermosetting composition comprising a methacrylate containing compound (a1), a monomer copolymerizable with said methacrylate containing compound, a transition metal compound (c), **characterized in that** the composition comprises a compound (b) according to formula (1) as monomer copolymerizable with said methacrylate containing compound 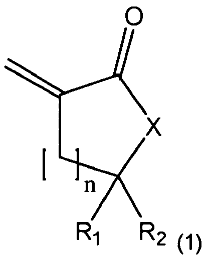 whereby n= 0-3; R₁ and R₂ each individually represent H, C₁-C₂₀ alkyl, C₃-C₂₀ cycloalkyl, C₆-C₂₀ aryl, C₇-C₂₀ alkylaryl or C₇-C₂₀ arylalkyl; X = O, S or NR₃ whereby R₃ = H, C₁-C₂₀ alkyl, C₃-C₂₀ cycloalkyl, C₆-C₂₀ aryl, C₇-C₂₀ alkylaryl, C₇-C₂₀ arylalkyl, part of a polymer chain or attached to a polymer chain; the composition comprises at least one transition metal compound (c) selected from the group consisting of Co, Cu, Mn and Fe compounds; and the composition comprises (in)organic filler, and whereby the composition is curable with a peroxide selected from the group consisting of hydroperoxides, perketals, peresters, percarbonates and mixtures thereof.

17. Cured object obtained by the process according to anyone of claims 1-14 or obtained by mixing the compounds of the multicomponent system according to claim 15 or obtained by curing the thermosetting composition according to claim 16 with a peroxide selected from the group consisting of hydroperoxides, perketals, peresters, percarbonates and mixtures thereof.

18. Use of the cured object of claim 17 in automotive, boats, chemical anchoring, roofing, construction, containers, relining, pipes, tanks, flooring or windmill blades.

## Patentansprüche

1. Verfahren zum radikalischen Härten einer Zusammensetzung, die eine methacrylathaltige Verbindung (a1) und ein mit der methacrylathaltigen Verbindung copolymerisierbares Monomer umfasst, in Gegenwart einer Übergangsmetallverbindung (c) und eines Peroxids, **dadurch gekennzeichnet, dass** die Zusammensetzung als mit der methacrylathaltigen Verbindung copolymerisierbares Monomer eine Verbindung (b) gemäß Formel (1) umfasst 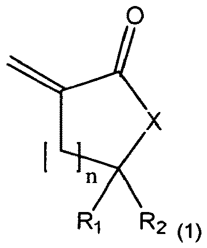 wobei n = 0 bis 3; R₁ und R₂ jeweils individuell für H, C₁-C₂₀-Alkyl, C₃-C₂₀-Cycloalkyl, C₆-C₂₀-Aryl, C₇-C₂₀-Alkylaryl oder C₇-C₂₀-Arylalkyl stehen; X = O, S oder NR₃, wobei R₃ = H, C₁-C₂₀-Alkyl, C₃-C₂₀-Cycloalkyl, C₆-C₂₀-Aryl, C₇-C₂₀-Alkylaryl, C₇-C₂₀-Arylalkyl, Teil einer Polymerkette oder an eine Polymerkette gebunden,
und die Zusammensetzung mindestens eine Übergangsmetallverbindung (c) aus der Gruppe bestehend aus Co-, Cu-, Mn- und Fe-Verbindungen umfasst, und die Härtung in Gegenwart eines Peroxids aus der Gruppe bestehend aus Hydroperoxiden, Perketalen, Perestern, Percarbonaten und Mischungen davon durchgeführt wird.

2. Verfahren nach Anspruch 1, **dadurch gekennzeichnet, dass** Verbindung (b) der Formel (2) entspricht 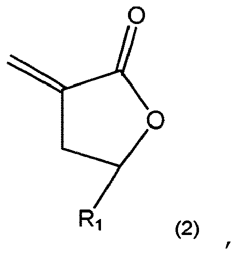 wobei R₁ für H oder CH₃ steht.

3. Verfahren nach Anspruch 1 oder 2, **dadurch gekennzeichnet, dass** die methacrylathaltige Verbindung (a1) ein zahlenmittleres Molekulargewicht Mₙ von mindestens 225 Dalton und höchstens 10.000 Dalton aufweist.

4. Verfahren nach einem der vorhergehenden Ansprüche, **dadurch gekennzeichnet, dass** mindestens ein Teil der in der Zusammensetzung vorliegenden methacrylathaltigen Verbindung (a1) eine Methacrylatfunktionalität von mindestens 2 aufweist.

5. Verfahren nach einem der vorhergehenden Ansprüche, **dadurch gekennzeichnet, dass** die durchschnittliche Funktionalität der methacrylathaltigen Verbindungen (a1) größer als 1, vorzugsweise größer als 1,5 und weiter bevorzugt größer als 1,7 ist.

6. Verfahren nach einem der vorhergehenden Ansprüche, **dadurch gekennzeichnet, dass** die durchschnittliche Funktionalität der methacrylathaltigen Verbindungen (a1) kleiner als 4 und weiter bevorzugt kleiner als 3 ist.

7. Verfahren nach einem der vorhergehenden Ansprüche, **dadurch gekennzeichnet, dass** die methacrylathaltigen Verbindungen (a1) ferner mindestens eine Ethergruppe und mindestens eine Hydroxylgruppe enthalten.

8. Verfahren nach einem der vorhergehenden Ansprüche, **dadurch gekennzeichnet, dass** die methacrylathaltigen Verbindungen (a1) ferner mindestens eine Urethangruppe enthalten.

9. Verfahren nach einem der vorhergehenden Ansprüche, **dadurch gekennzeichnet, dass** die Zusammensetzung eine methacrylathaltige Verbindung (a1) mit einem zahlenmittleren Molekulargewicht Mₙ von mindestens 600 Dalton umfasst und die Zusammensetzung ferner eine ethylenisch ungesättigte Verbindung (a2) mit einem zahlenmittleren Molekulargewicht Mₙ von höchstens 300 Dalton umfasst.

10. Verfahren nach einem der vorhergehenden Ansprüche, **dadurch gekennzeichnet, dass** die Härtung in Gegenwart einer Übergangsmetallverbindung (c) aus der Gruppe bestehend aus Co-, Cu-, Mn-Verbindungen und einer Mischung davon durchgeführt wird.

11. Verfahren nach einem der vorhergehenden Ansprüche, **dadurch gekennzeichnet, dass** es sich bei den Co-Verbindungen, Cu-Verbindungen, Fe-Verbindungen und Mn-Verbindungen um Salze und/oder Komplexe handelt.

12. Verfahren nach einem der vorhergehenden Ansprüche, **dadurch gekennzeichnet, dass** die Gesamtmenge (in mmol) von Co-, Cu-, Mn- und Fe-Verbindungen (bezogen auf die Gesamtmenge (in Kilogramm) von Verbindung (a) und Verbindung (b)) 0,01 bis 30 beträgt.

13. Verfahren nach einem der vorhergehenden Ansprüche, **dadurch gekennzeichnet, dass** das Verfahren in Gegenwart eines Cobeschleunigers durchgeführt wird.

14. Verfahren nach einem der vorhergehenden Ansprüche, **dadurch gekennzeichnet, dass** man bei dem Verfahren das Peroxid zu einer Zusammensetzung, die die Verbindungen (a1), (b) und (c) umfasst, gibt.

15. Mehrkomponentensystem, umfassend eine methacrylathaltige Verbindung (a1), ein mit der methacrylathaltigen Verbindung copolymerisierbares Monomer, eine Übergangsmetallverbindung (c) und ein Peroxid, **dadurch gekennzeichnet, dass** das System als mit der methacrylathaltigen Verbindung copolymerisierbares Monomer eine Verbindung (b) gemäß Formel (1) umfasst 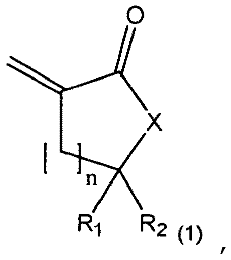 wobei n = 0 bis 3; R₁ und R₂ jeweils individuell für H, C₁-C₂₀-Alkyl, C₃-C₂₀-Cycloalkyl, C₆-C₂₀-Aryl, C₇-C₂₀-Alkylaryl oder C₇-C₂₀-Arylalkyl stehen; X = O, S oder NR₃, wobei R₃ = H, C₁-C₂₀-Alkyl, C₃-C₂₀-Cycloalkyl, C₆-C₂₀-Aryl, C₇-C₂₀-Alkylaryl, C₇-C₂₀-Arylalkyl, Teil einer Polymerkette oder an eine Polymerkette gebunden;
das System mindestens eine Übergangsmetallverbindung (c) aus der Gruppe bestehend aus Co-, Cu-, Mn- und Fe-Verbindungen und mindestens ein Peroxid aus der Gruppe bestehend aus Hydroperoxiden, Perketalen, Perestern und Percarbonaten umfasst.

16. Wärmehärtende Zusammensetzung, umfassend eine methacrylathaltige Verbindung (a1), ein mit der methacrylathaltigen Verbindung copolymerisierbares Monomer, eine Übergangsmetallverbindung (c), **dadurch gekennzeichnet, dass** die Zusammensetzung als mit der methacrylathaltigen Verbindung copolymerisierbares Monomer eine Verbindung (b) gemäß Formel (1) umfasst 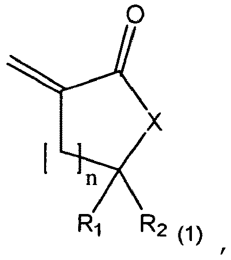 wobei n = 0 bis 3; R₁ und R₂ jeweils individuell für H, C₁-C₂₀-Alkyl, C₃-C₂₀-Cycloalkyl, C₆-C₂₀-Aryl, C₇-C₂₀-Alkylaryl oder C₇-C₂₀-Arylalkyl stehen; X = O, S oder NR₃, wobei R₃ = H, C₁-C₂₀-Alkyl, C₃-C₂₀-Cycloalkyl, C₆-C₂₀-Aryl, C₇-C₂₀-Alkylaryl, C₇-C₂₀-Arylalkyl, Teil einer Polymerkette oder an eine Polymerkette gebunden; die Zusammensetzung mindestens eine Übergangsmetallverbindung (c) aus der Gruppe bestehend aus Co-, Cu-, Mn- und Fe-Verbindungen umfasst und die Zusammensetzung (an)organischen Füllstoff umfasst, und wobei die Zusammensetzung mit einem Peroxid aus der Gruppe bestehend aus Hydroperoxiden, Perketalen, Perestern, Percarbonaten und Mischungen davon härtbar ist.

17. Gehärtetes Objekt, erhalten durch das Verfahren nach einem der Ansprüche 1-14 oder erhalten durch Mischen der Verbindungen des Mehrkomponentensystems nach Anspruch 15 oder erhalten durch Härten der wärmehärtenden Zusammensetzung nach Anspruch 16 mit einem Peroxid aus der Gruppe bestehend aus Hydroperoxiden, Perketalen, Perestern, Percarbonaten und Mischungen davon.

18. Verwendung des gehärteten Objekts nach Anspruch 17 in Autos, in Booten, bei der chemischen Verankerung, im Dachbau, im Hochbau, in Behältern, beim Nachfüttern, in Rohren, in Tanks, in Bodenbelägen oder in Windkraftwerksflügeln.

## Revendications

1. Procédé permettant de faire durcir par voie radicalaire une composition comprenant un composé contenant une fonctionnalité méthacrylate (a1) et un monomère copolymérisable avec ledit composé contenant une fonctionnalité méthacrylate en présence d'un composé de métal de transition (c) et d'un peroxyde (d), **caractérisé en ce que** la composition comprend un composé (b) répondant à la formule (1) en tant que monomère copolymérisable avec ledit composé contenant une fonctionnalité méthacrylate 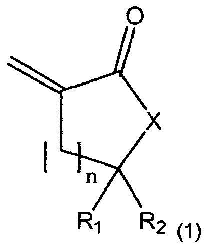 où
n = 0-3 ;
R₁ et R₂ représentent chacun individuellement H, un alkyle en C₁-C₂₀, un cycloalkyle en C₃-C₂₀, un aryle en C₆-C₂₀, un alkylaryle en C₇-C₂₀ ou un arylalkyle en C₇-C₂₀ ;
X = O, S ou NR₃
où
R₃ = H, un alkyle en C₁-C₂₀, un cycloalkyle en C₃-C₂₀, un aryle en C₆-C₂₀, un alkylaryle en C₇-C₂₀, un arylalkyle en C₇-C₂₀ ou une partie d'une chaîne de polymère ou est attaché à une chaîne de polymère,
et la composition comprend au moins un composé de métal de transition (c) choisi dans le groupe constitué par les composés de Co, Cu, Mn et Fe,
et le durcissement est effectué en présence d'un peroxyde choisi dans le groupe constitué par les hydroperoxydes, les percétals, les peresters, les percarbonates et les mélanges de ceux-ci.

2. Procédé selon la revendication 1, **caractérisé en ce que** le composé (b) répond à la formule (2) 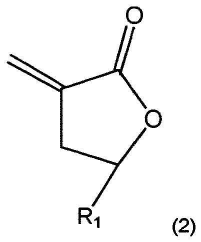 où
R₁ est H ou CH₃.

3. Procédé selon la revendication 1 ou 2, **caractérisé en ce que** le composé contenant une fonctionnalité méthacrylate (a1) a une masse moléculaire moyenne en nombre Mₙ d'au moins 225 Daltons et d'au maximum 10 000 Daltons.

4. Procédé selon l'une quelconque des revendications précédentes, **caractérisé en ce qu'**au moins une partie du composé contenant une fonctionnalité méthacrylate (a1) présent dans la composition a une fonctionnalité méthacrylate d'au moins 2.

5. Procédé selon l'une quelconque des revendications précédentes, **caractérisé en ce que** la fonctionnalité moyenne des composés contenant une fonctionnalité méthacrylate (a1) est supérieure à 1, de préférence supérieure à 1,5 et de préférence encore supérieure à 1,7.

6. Procédé selon l'une quelconque des revendications précédentes, **caractérisé en ce que** la fonctionnalité moyenne des composés contenant une fonctionnalité méthacrylate (a1) est inférieure à 4, de préférence encore inférieure à 3.

7. Procédé selon l'une quelconque des revendications précédentes, **caractérisé en ce que** les composés contenant une fonctionnalité méthacrylate (a1) contiennent en outre au moins un groupe éther et au moins un groupe hydroxyle.

8. Procédé selon l'une quelconque des revendications précédentes, **caractérisé en ce que** les composés contenant une fonctionnalité méthacrylate (a1) contiennent en outre au moins un groupe uréthane.

9. Procédé selon l'une quelconque des revendications précédentes, **caractérisé en ce que** la composition comprend un composé contenant une fonctionnalité méthacrylate (a1) ayant une masse moléculaire moyenne en nombre Mₙ d'au moins 600 Daltons et la composition comprend en outre un composé à insaturation éthylénique (a2) ayant une masse moléculaire moyenne en nombre Mₙ d'au maximum 300 Daltons.

10. Procédé selon l'une quelconque des revendications précédentes, **caractérisé en ce que** le durcissement est effectué en présence d'un composé de métal de transition (c) choisi dans le groupe constitué par les composés de Co, Cu, Mn et tout mélange de ceux-ci.

11. Procédé selon l'une quelconque des revendications précédentes, **caractérisé en ce que** les composés de Co, les composés de Cu, les composés de Fe et les composés de Mn sont des sels et/ou des complexes.

12. Procédé selon l'une quelconque des revendications précédentes, **caractérisé en ce que** la quantité totale (en mmol) de composés de Co, Cu, Mn et Fe (par rapport à la quantité totale (en kilogrammes) de composé (a) et de composé (b)) est de 0,01 à 30.

13. Procédé selon l'une quelconque des revendications précédentes, **caractérisé en ce que** le procédé est effectué en présence d'un co-accélérateur.

14. Procédé selon l'une quelconque des revendications précédentes, **caractérisé en ce que** le procédé comprend l'ajout du peroxyde à une composition comprenant les composés (a1), (b) et (c).

15. Système à plusieurs composants comprenant un composé contenant une fonctionnalité méthacrylate (a1), un monomère copolymérisable avec ledit composé contenant une fonctionnalité méthacrylate, un composé de métal de transition (c) et un peroxyde, **caractérisé en ce que** le système comprend un composé (b) répondant à la formule (1) en tant que monomère copolymérisable avec ledit composé contenant une fonctionnalité méthacrylate 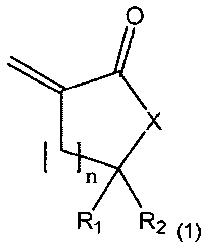 où
n = 0-3 ;
R₁ et R₂ représentent chacun individuellement H, un alkyle en C₁-C₂₀, un cycloalkyle en C₃-C₂₀, un aryle en C₆-C₂₀, un alkylaryle en C₇-C₂₀ ou un arylalkyle en C₇-C₂₀ ;
X = O, S ou NR₃
où
R₃ = H, un alkyle en C₁-C₂₀, un cycloalkyle en C₃-C₂₀, un aryle en C₆-C₂₀, un alkylaryle en C₇-C₂₀, un arylalkyle en C₇-C₂₀ ou une partie d'une chaîne de polymère ou est attaché à une chaîne de polymère ;
le système comprend au moins un composé de métal de transition (c) choisi dans le groupe constitué par les composés de Co, Cu, Mn et Fe ; et au moins un peroxyde choisi dans le groupe constitué par les hydroperoxydes, les percétals, les peresters et les percarbonates.

16. Composition thermodurcissable comprenant un composé contenant une fonctionnalité méthacrylate (a1), un monomère copolymérisable avec ledit composé contenant une fonctionnalité méthacrylate et un composé de métal de transition (c), **caractérisée en ce que** la composition comprend un composé (b) répondant à la formule (1) en tant que monomère copolymérisable avec ledit composé contenant une fonctionnalité méthacrylate 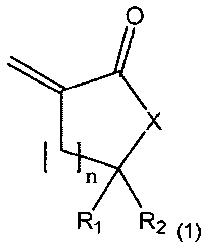 où
n = 0-3 ;
R₁ et R₂ représentent chacun individuellement H, un alkyle en C₁-C₂₀, un cycloalkyle en C₃-C₂₀, un aryle en C₆-C₂₀, un alkylaryle en C₇-C₂₀ ou un arylalkyle en C₇-C₂₀ ;
X = O, S ou NR₃ où
R₃ = H, un alkyle en C₁-C₂₀, un cycloalkyle en C₃-C₂₀, un aryle en C₆-C₂₀, un alkylaryle en C₇-C₂₀, un arylalkyle en C₇-C₂₀ ou une partie d'une chaîne de polymère ou est attaché à une chaîne de polymère ;
la composition comprend au moins un composé de métal de transition (c) choisi dans le groupe constitué par les composés de Co, Cu, Mn et Fe ; et la composition comprend une charge organique ou inorganique, et la composition étant durcissable avec un peroxyde choisi dans le groupe constitué par les hydroperoxydes, les percétals, les peresters, les percarbonates et les mélanges de ceux-ci.

17. Objet durci obtenu par le procédé selon l'une quelconque des revendications 1-14 ou obtenu par mélange des composés du système à plusieurs composants selon la revendication 15 ou obtenu par durcissement de la composition thermodurcissable selon la revendication 16 avec un peroxyde choisi dans le groupe constitué par les hydroperoxydes, les percétals, les peresters, les percarbonates et les mélanges de ceux-ci.

18. Utilisation de l'objet durci selon la revendication 17 dans l'automobile, des bateaux, l'ancrage chimique, la couverture de toits, la construction, des récipients, le regarnissage, des tuyaux, des cuves, le revêtement de sol ou des pales d'éoliennes.
